# EUROPEAN PATENT SPECIFICATION

(11) **EP 2 778 012 B1**
(45) Date of publication and mention of the grant of the patent: **24.07.2019**
(21) Application number: 13159510.0
(22) Date of filing: 15.03.2013
(51) Int. Cl.: B61K 9/06, G01J 5/52

(54) **Integrity verification of IR detectors for a rail vehicle**
Integritätsprüfung von IR-Detektoren für ein Schienenfahrzeug
Vérification d'intégrité de détecteurs IR pour véhicule ferroviaire

(43) Date of publication of application: 17.09.2014
(73) Proprietor: ECM S.P.A., 51034 Serravalle Pistoiese (PT) (IT)
(72) Inventor: Agostini, Alessandro, 50134 FIRENZE (IT); Tili, Marco, 59021 VAIANO PO (IT); Viggiani, Mario, 50027 STRADA IN CHIANTI FI (IT); Ricci, Andrea, 50124 FIRENZE (IT)
(74) Representative: BRP Renaud & Partner mbB Rechtsanwälte Patentanwälte Steuerberater

(56) References cited:
- EP-A1- 0 604 389
- EP-A1- 0 670 255
- EP-A1- 2 584 329
- DE-A1- 4 107 649
- JP-A- S63 225 132
- US-A- 3 998 549
- US-A- 5 060 890
- US-A- 5 292 090
- US-B1- 6 695 472

## Description

### Technical Field

This disclosure generally relates to the field of rail transportation, and to the field of infrared detectors for undercarriage components of trains. This disclosure relates, more particularly, to the testing of infrared detectors for undercarriage components of trains.

### Background

Safe and reliable operation of a railroad system may be dependent upon the integrity of the undercarriage components of rail vehicles. Worn or damaged undercarriage components, such as train wheel or train wheel bearings, may increase the rolling friction of an axle thereby requiring an increase of power to move the train.

In addition, worn or damaged undercarriage components may cause excessive wear to the train axle and, in the case of failure of the bearing, may even cause the axle to lock up by preventing rotation of the wheel and thus resulting in a potential fire hazard due to the heat build up and potential sparking caused by friction of the locked wheel scraping along the rail.

Bearing temperatures may be detected by sensing a temperature of the wheel bearing indirectly through a bearing box surrounding the wheel bearing on the rail vehicle. For example, infrared radiation (IR) detectors may be mounted along a rail to detect IR energy emitted by an outer wheel bearing of passing rail vehicles. The emissions of IR energy may be indicative of a temperature of the wheel bearing.

The bearing temperatures may be detected by IR detectors that comprise sensing elements aimed at different parts of a target scanning area of the rail vehicle undercarriage component. The IR data obtained may be used to generate respective scanning signature waveform data corresponding to each different region. The IR detectors may be oriented so that at least one of the sensing elements receives unobstructed infrared emissions from the undercarriage component passing over the IR detector. An example of an apparatus and a method for integrity verification of an IR detector is known from US-A-3 998 549.

A control circuit for the IR detectors may cause an alarm to be raised if the IR data is indicative of temperature that is higher than a pre-set temperature threshold.

However, the IR detectors may have failures. A failure may be incorrect data being generated based on the IR emissions.

The present disclosure is directed, at least in part, to improving or overcoming one or more aspects of the prior art system.

### Brief Summary of the Invention

In a first aspect, the present disclosure describes an apparatus for integrity verification of an IR detector as defined by appended claim 1.

In a second aspect, the present disclosure describes a method for integrity verification of an IR detector as defined by appended claim 9.

### Brief Description of the Drawings

The foregoing and other features and advantages of the present disclosure will be more fully understood from the following description of various embodiments, when read together with the accompanying drawings, in which:
Fig. 1 is a schematic diagram of an apparatus for integrity verification of an IR detector for a rail vehicle undercarriage component in a first embodiment according to the present disclosure;
Fig. 2 is a schematic diagram of an apparatus for integrity verification of an IR detector for a rail vehicle undercarriage component in a second embodiment according to the present disclosure;
Fig. 3 is a schematic diagram of an apparatus for integrity verification of an IR detector for a rail vehicle undercarriage component according to the present disclosure and that is not part of the invention; and
Fig. 4 is a schematic diagram of an apparatus for integrity verification of an IR detector for a rail vehicle undercarriage component according to the present disclosure and that is not part of the invention.

### Detailed Description

This disclosure generally relates to an apparatus for verifying the integrity of an IR detector that is provided to detect the temperature of rail vehicle undercarriage components. Integrity verification may involve testing the accuracy and reliability of the IR detector by providing a reference IR signal and comparing the detected temperature of the IR signal and the temperature of the IR signal.

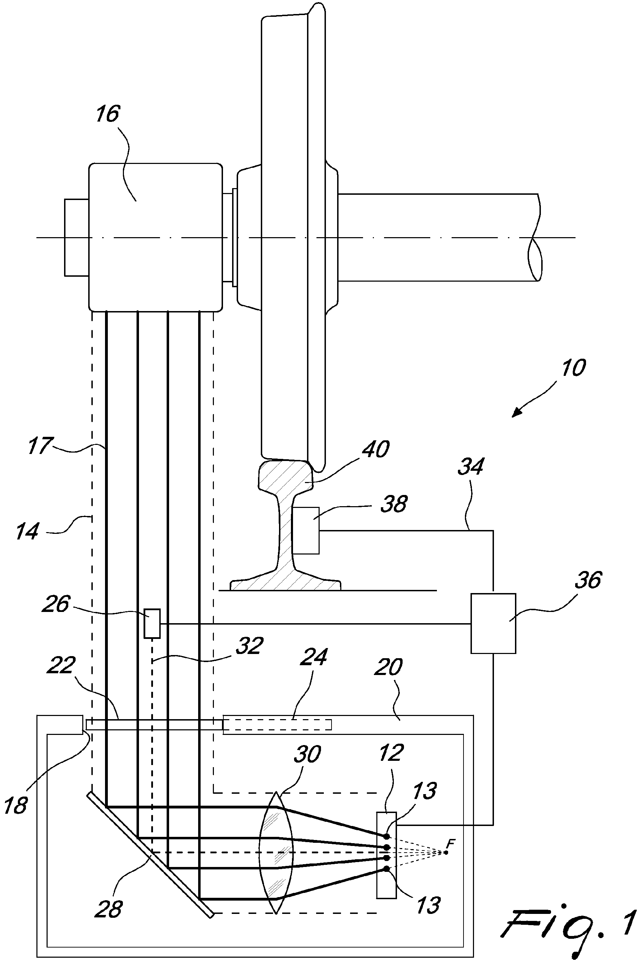

With reference to Fig. 1, the apparatus **10** may verify the integrity of an IR detector **12.** The apparatus **10** may be located at a rail track **40** for performing an integrity verification test on the IR detector **12** that may be positioned in a rail bed of the track **40,** such as within a cross tie or a sleeper.

The IR detector **12** may be positioned to receive IR emissions **17** from a rail vehicle undercarriage passing over the IR detector **12.** The IR detector **12** may have a series of sensing elements **13.** A rail undercarriage may comprise undercarriage components **16,** for example wheels, wheel bearings and axles. IR detector **12** may be orientated so as to receive IR emissions **17** from the target undercarriage component **16.** IR emissions **17** may be obtained as the undercarriage component **16** passes over the IR detector **12.** IR emissions **17** may be received by the sensing elements **13.**

IR emissions **17** may traverse through an aperture **18** that is provided in the body **20** of the IR detector **12.** The aperture **18** may be opened or closed through a shutter **22.** A slot **24** may be provided in a portion of body **20** adjacent to the aperture **18** to receive the shutter **22.** The aperture **18** may be opened when the shutter **22** is moved into the slot **24.** The aperture **18** may be closed when the shutter **22** is moved from the slot **24** into the aperture **18.**

The actuation of the shutter **22** to move into and out from the slot **24** may be linked to the passage of a rail vehicle. The passage of a rail vehicle may result in the actuation of the shutter **22** to move into the slot **24** so as to open the aperture **18** for entry of the IR emissions **17.** In the absence of a passing rail vehicle the shutter **22** may be actuated to move out from the slot **24** so as to close the aperture **18.**

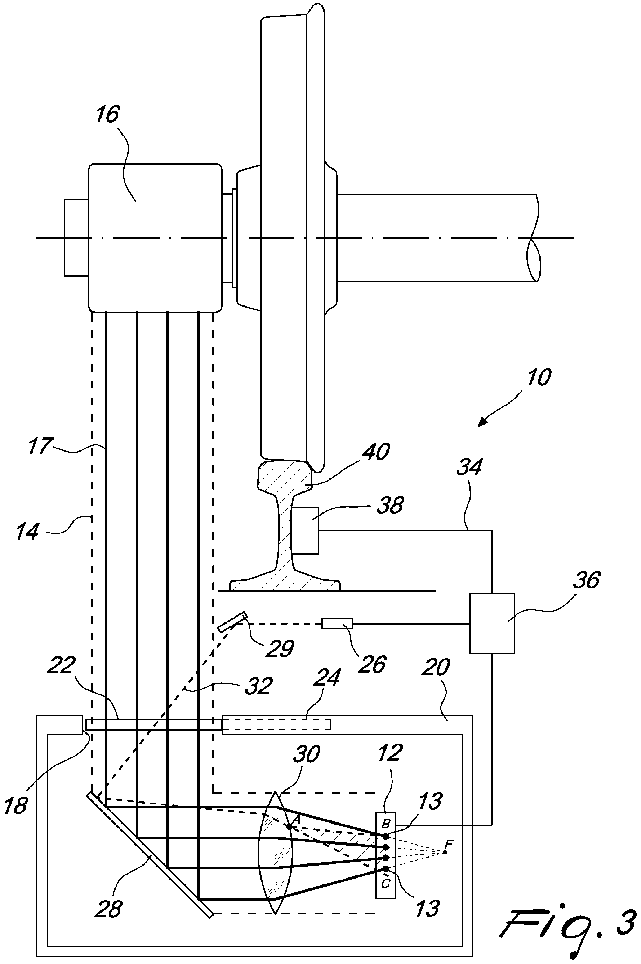

With reference to Figs. 1 and 3, the IR emissions **17** may be diverted after passing into the body **20** through the aperture **18.** IR emissions **17** may be diverted to the IR detector **12** by a reflector **28.** In an embodiment, the reflector **28** may be a mirror. The reflecting plane of the reflector **28** may be inclined relative to the aperture **18** at an angle of about 45°. In an embodiment, the IR detector **12** may be positioned in the body **20** so as to receive IR emissions **17** passing directly through the aperture **18.**

With reference to Figs. 1, 2, 3 and 4, the IR emissions **17** may be focused by a lens **30** prior to being received by the IR detector **12.** Lens **30** may have a focal length **F.**

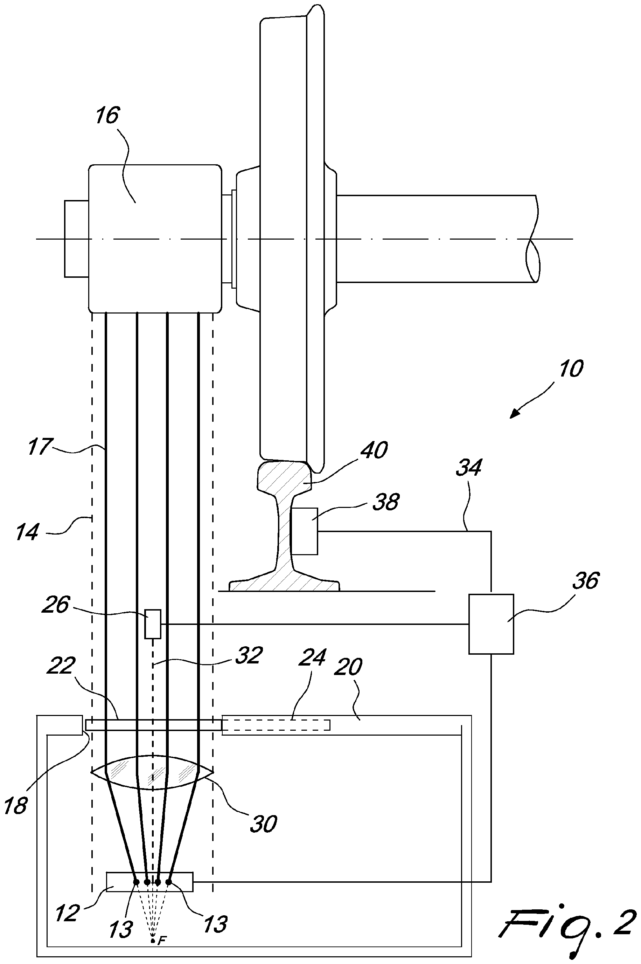

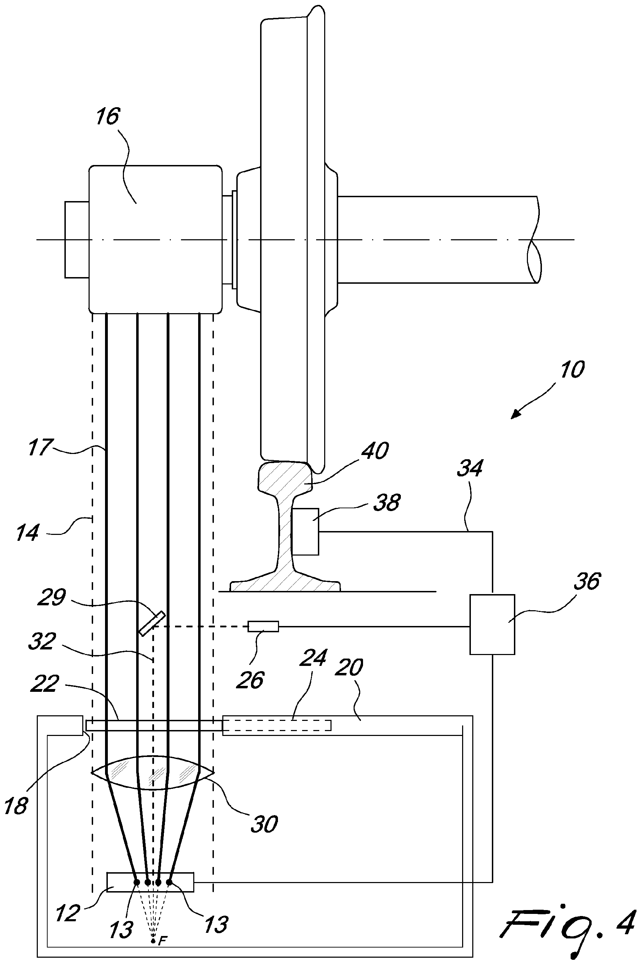

With reference to Fig. 2 and 4, the IR detector **12** may have a detection path **14.** The detection path **14** may be defined as the optical path from the zone within which the undercarriage component **16** may pass. IR emission **17** may travel along the detection path **14** from the undercarriage component **16** to the IR detector **12.** The IR detector **12** may be configured to detect a temperature of an IR emission **17** from the undercarriage component **16** that is within the detection path **14.** The detection path **14** may traverse through the aperture **18.** With reference to Figs. 1 and 3, the detection path **14** may include a diversion with a reflector **28.**

The detection path **14** may have a distance of between 600mm to 800mm from the IR detector **12.** The detection path **14** may have a distance of between 600mm to 800mm from the IR detector **12** to the undercarriage component **16.** In an embodiment, the detection path **14** may have a distance of 700mm from the IR detector. In an embodiment, the detection path **14** may have a distance of 700mm from the IR detector **12** to the undercarriage component **16.**

In an embodiment, a plurality of IR detectors **12** may be disposed in the rail bed of the track. Each of the IR detectors **12** may have a distinct detection path **14.** The IR detectors **12** may each be orientated to scan various undercarriage components **16.**

The apparatus **10** may be positioned away from the passage of the rail vehicle. The passage of the rail vehicle may be defined as the spatial course of the rail vehicle travelling on the track. The passage of the rail vehicle may also be defined as the movement of the rail vehicle travelling on the track. The apparatus **10** may be positioned adjacent to the IR detector **12.**

With reference to Figs. 1, 2, 3 and 4, the apparatus **10** may comprise an IR emitter **26.** The IR emitter **26** may be configured to emit an IR signal **32.** The IR emitter **26** may produce the IR signal **32** as IR electromagnetic emissions. The IR signal **32** may be a continuous infrared beam or high speed infrared flashes. The IR signal **32** may be emitted at a predetermined reference temperature. The IR signal **32** may be emitted at variable temperatures such that IR signals **32** at different reference temperatures may be emitted.

The IR signal **32** may be directed at the IR detector **12** so as to be detected by the IR detector **12.** The IR detector **12** may be configured to detect a temperature of the IR signal **32.** The integrity of the IR detector **12** may be determined from the detected temperature. The accuracy and reliability of the IR detector **12** may be positively determined when the detected temperature is equal to the reference temperature at which the IR signal **32** was emitted or substantially equal to the temperature at which the IR signal **32** was emitted. The accuracy and reliability of the IR detector **12** may be negatively determined when the detected temperature is not equal to the reference temperature at which the IR signal **32** was emitted or not substantially equal to the temperature at which the IR signal **32** was emitted.

The IR emitter **26** may be positioned such that the IR signal **32** is directed at the IR detector **12.** In an aspect that is not part of the invention, the IR emitter **26** may be positioned external to the detection path **14.** IR emitter **26** may be orientated such that the IR signal **32** is directed at the IR detector **12.**

With reference to Figs. 1 and 2, the IR emitter **26** may be positioned in the detection path **14** of the IR detector **12.** With reference to Fig. 1, IR emitter **26** may be positioned such that the IR signal **32** is directed at the IR detector **12** through lens **30.** With reference to Fig. 2, IR emitter **26** may be positioned such that the IR signal **32** is not directed at the IR detector **12.** In an aspect that is not part of the invention, the IR signal **32** may be reflected by the reflector **28** so as to be directed at the IR detector **12** through lens **30.**

With reference to Figs. 3 and 4, IR emitter **26** may be positioned external to the detection path **14.** A reflector system comprising the reflector **28** and a IR signal reflector **29** may be used to direct the IR signal **32** to the detection path **14.** The IR signal **32** may be directed transverse to the IR emissions **17.** IR signal reflector **29** may be positioned to reflect the IR signal **32** towards reflector **28.** IR signal may be subsequently reflected to the IR detector **12** through lens **30.** With reference to Fig. 3, the IR signal reflector **29** may be positioned external to the detection path **14.** With reference to Fig. 4, the IR signal reflector **29** may be positioned in to the detection path **14.** The IR signal reflector **29** may be of a size so that only a small portion of the IR emission **17** from the undercarriage component **16** is obstructed.

In an aspect that is not part of the invention, IR emitter **26** may be positioned external to the detection path **14** and the reflector system comprising the IR signal reflector **29** may be used to direct the IR signal **32** to the detection path **14.** IR signal reflector **29** may be positioned to reflect the IR signal **32** towards the IR detector **12** through lens **30.** The IR signal reflector **29** may be mounted so as to be supported in or external to the detection path **14.** In an embodiment, IR signal reflector **29** may be coupled to the IR emitter **26** through a mounting bracket.

With reference to Fig. 3, the IR signal reflector **29** may be positioned external to the detection path **14.** With reference to Fig. 4, the IR signal reflector **29** may be positioned in the detection path **14.** The IR signal reflector **29** may be of a size so that only a small portion of the IR emission **17** from the undercarriage component **16** is obstructed.The IR emitter **26** may be mounted so as to be supported in the detection path **14.** In an embodiment, IR emitter **26** may be mounted to the IR detector **12** so as to be supported in the detection path **14.**

The IR emitter **26** may be mounted externally to the body **20** and aligned with the aperture **18.** IR emitter **26** may be mounted externally to body **20** through a mechanical support. IR emitter **26** may face the aperture **18** such that the emitted IR signal **32** may pass through the aperture **18** into the body **20.** Emitted IR signal **32** may pass into the body **20** when the aperture **18** is open. Emitted IR signal **32** may not pass into the body **29** when the aperture **18** is closed by the shutter **22.**

IR emitter **26** may be externally mounted so as to be centrally aligned relative the aperture **18.** IR emitter **26** may be vertically aligned with the aperture **18.** In an embodiment, IR emitter **26** may be externally mounted off centre relative to the aperture **18.** IR emitter **26** may be externally mounted so as to be aligned marginally relative to the aperture **18.** The term marginally may be defined as between the centre and the edge of an object. IR emitter **26** may be vertically aligned with the aperture **18.** In a further embodiment, IR emitter **26** may be externally mounted spaced from the plane of the aperture **18.**

In an embodiment, the IR emitter **26** may be mounted internally to the body **20.** IR emitter **26** may be mounted externally to body **20** through a mechanical support. The emitted IR signal **32** does not pass through the aperture **18** to enter the body **20.** Entry of emitted IR signal **32** into the body **20** may not be dependent on the aperture **18** being opened.

IR emitter **26** may be internally mounted so as to be centrally aligned relative the aperture **18.** IR emitter **26** may be vertically aligned with the aperture **18.** In an embodiment, IR emitter **26** may be internally mounted off centre relative to the aperture **18.** IR emitter **26** may be internally mounted so as to be aligned marginally relative to the aperture **18.** IR emitter **26** may be vertically aligned with the aperture **18.** In a further embodiment, IR emitter **26** may be internally mounted spaced from the plane of the aperture **18.**

The IR emitter **26** may occupy a small portion of the detection path **14.** IR emitter **26** may be selected so that only a small portion of the IR emission **17** from the undercarriage component **16** is obstructed. IR emitter **26** may have a diameter of approximately 3mm. IR emitter **26** may be a mid IR diode.

In an embodiment, a Thermo Electric Cooler may be provided to maintain the emitted IR signal **32** stable. The Thermo Electric Cooler may be coupled to the IR emitter **26.** The encumbrance of the IR emitter **26** may be increased with the presence of the Thermo Electric Cooler. The IR emitter **26** coupled with the Thermo Electric Cooler may be positioned external to the detection path **14.**

Lens **30** may be selected to focus the IR signal **32** onto the IR detector **12.** Lens **30** may be positioned between the aperture **18** and the IR detector **12.** In an embodiment, lens **30** may be positioned between the reflector **28** and the IR detector **12.**

With reference to Fig. 3, the lens **30** may have a characteristic that permits the IR signal **32** to be focused on one of a range of points of the IR detector **12.** Lens **30** may have an aberration when the IR signal **32** is off the optical axis and passes through the lens **30** at an angle to the optical the IR signal **32** may be focused on the IR detector **12.** Lens **30** may have an aberration such that when the IR signal **32** is off the optical axis and passes through the lens **30** at an angle to the optical, the IR signal **32** may be focused on one of a range of points of the IR detector **12.** With reference to Fig. 3, the IR signal **32** exiting from point **A** on lens **30** may be focused between points **B** and **C.**

IR signal **32** passing through the centre of the lens **30** with focal length *f* and at an angle θ is focused at a point with distance *f* tan θ from the optical axis. IR signal **32** passing through the outer margins of the lens **30** is focused at different points, either further from the optical axis or closer to the optical axis.

The foregoing description of the lens **30** is not limited to the embodiment of Fig. 3. The lens **30** having the aberration may also be used in embodiments of Figs. 1 and 2 and other embodiments as herein disclosed. As regards to the embodiment of Fig. 1, the IR emitter **26** may be moved to be off the optical axis of the lens **30.** The IR signal **32** may be off the optical axis and passing through the outer margin of the lens **30** at an angle to the optical axis, the IR signal **32** may be focused on one of a range of points of the IR detector **12.** As regards the embodiment of Fig. 2, the IR emitter **26** may be positioned off such that the signal reflected by the reflector **28** is the optical axis of the lens **30.** The reflected IR signal **32** may be off the optical axis and passing through the outer margin of the lens **30** at an angle to the optical axis, the reflected IR signal **32** may be focussed onto one of a range of points of the IR detector **12.**

IR emitter **26** may be disposed adjacent to the IR detector **12.** IR emitter **26** may be vertically adjacent relative to the IR detector **12** IR emitter **26** may be positioned at a distance between 300mm to 150mm from the IR detector **12.** In an embodiment, IR emitter **26** may be positioned at a distance of 200mm from the IR detector **12**

In an embodiment, the position of the IR emitter **26** may be determined by the lens **30.** IR emitter **26** may be disposed adjacent to lens **30.**

The IR emitter **26** may be aligned with lens **30** and spaced from the center thereof. IR emitter **26** may be positioned off the optical axis of the lens **30.** IR emitter **26** may emit an IR signal **32** that passes between the edge and the center of lens **30.** The distance of the IR emitter **26** from the lens may be determined from the focal length of the lens. IR emitter **26** may be positioned between lx to lOx of the focal length of lens **30.**

The IR emitter **26** may be disposed alignment with the center of lens **30.** IR emitter **26** may be positioned in alignment with the optical axis of the lens **30.** IR emitter **26** may emit an IR signal **32** that passes through the center of lens **30.**

In an embodiment, a plurality of IR emitters **26** may be disposed in each of the detection paths **14** of the plurality of IR detectors. Each of the IR detectors **12** may have a distinct detection path **14.** Each of the IR emitters **26** may be orientated to direct the IR signal at the respective IR detector **12.**

The apparatus **10** may comprise a controller **36** connected to a control circuit **34.** The control circuit **34** may connect the IR emitter **26** to the controller **36.** In an embodiment, the control circuit **34** may connect the plurality of IR emitters **26** to the controller **36.** The control circuit **34** may connect the IR detector **12** to the controller **36.** In an embodiment, the control circuit **34** may connect the plurality of IR detectors **12** to the controller **36.**

The controller **36** may control the IR emitter **26** and the IR detector **12** through the control circuit **34.** Controller **36** may obtain thermal readings from the IR detector **12.** The controller **36** may activate the IR emitter **26** to emit the IR signal **32.** Controller **36** may be connected to the body **20** so as to control the operation of the shutter **22.**

The apparatus **10** may further comprise a wheel sensor **38** that is connected to the controller **36** or to the control circuit **34.** The wheel sensor **38** may be activated by a passing rail vehicle. The activation of the wheel sensor **38** may effect downstream activation of the IR detector **12** and the IR emitter **26** through the controller **36** or the control circuit **34.** The actuation of the shutter **22** may be connected to the passage of the rail vehicle through the controller **36** or the control circuit **34.** In an embodiment, the apparatus **10** may comprise a plurality of wheel sensors **38** that are each connected to the controller **36** or to the control circuit **34.**

A method for integrity verification of the IR detector **12** that is configured to detect a temperature of IR emissions **17** from an undercarriage component **16** in a detection path **14,** may comprise the following steps.

Detecting temperature of the IR emission **17** from the undercarriage component **16** during passage of the rail vehicle. IR emissions **17** from the undercarriage component **16** may be received by the IR detector **12.** Thermal reading of the detected temperature may be sent to the controller **36.**

Activating the IR emitter **26** to emit an IR signal **32** at a reference temperature, the IR emitter **26** being positioned in the detection path **14** such that the IR signal **32** is directed at the IR detector **12.** The controller **36** may activate the IR emitter **26** to emit the IR signal at the reference temperature. The IR signal **32** may be sent to the IR detector **12.**

Detecting temperature of the IR signal **32** of an IR emitter **26.** Thermal reading of the detected temperature may be sent to the controller **36.** IR signal **32** from the IR emitter **26** may be received by the IR detector **12.** Thermal reading of the detected temperature may be sent to the controller **36.**

Comparing the reference temperature of the IR signal **32** and the detected temperature of the IR signal **32** to determine the integrity of the IR detector **12.** The controller **36** may compare the thermal reading IR signal **32** to the reference temperature at which the IR signal was emitted.

A mismatch in the reference temperature and the detected temperature may result in an error signal. The controller **36** may check if an alarm has been raised when the detected temperature is not equal to the reference temperature at which the IR signal **32** was emitted or not substantially equal to the temperature at which the IR signal **32** was emitted. An error signal may be sent if an alarm is not raised when the detected temperature is not equal to the reference temperature at which the IR signal **32** was emitted or not substantially equal to the temperature at which the IR signal **32** was emitted.

The step of detecting the temperature of the IR emission **17** may precede the step of activating the IR emitter **26** to emit an IR signal **32** and the step of detecting the temperature of the IR signal **32.** The step of activating the IR emitter **26** to emit an IR signal **32** and the step of detecting the temperature of the IR signal **32** may precede the step of detecting the temperature of the IR emission **17.** The integrity of the IR detector **12** may be determined from the detected temperature.

The method for integrity verification of the IR detector **12** may further comprise the step of determining the accuracy of the detected temperature of the IR emission **17.**

The accuracy and reliability of the IR detector **12** may be positively determined when the detected temperature of the IR signal **32** is equal to the reference temperature at which the IR signal **32** was emitted or substantially equal to the temperature at which the IR signal **32** was emitted.

The detected temperature of the IR emission **17** may be determined accurate when the reference temperature of the IR signal **32** is equal to the detected temperature of the IR signal **32.** The detected temperature of the IR emission **17** may be determined accurate when the reference temperature of the IR signal **32** is substantially equal to the detected temperature of the IR signal **32.**

The accuracy and reliability of the IR detector **12** may be negatively determined when the detected temperature of the IR signal **32** is not the reference temperature at which the IR signal **32** was emitted or not substantially equal to the temperature at which the IR signal **32** was emitted.

The detected temperature of the IR emission **17** may be determined inaccurate when the reference temperature of the IR signal **32** is not equal to the detected temperature of the IR signal **32.** The detected temperature of the IR emission **17** may be determined inaccurate when the reference temperature of the IR signal **32** is not substantially equal to the detected temperature of the IR signal **32.**

The method for integrity verification of the IR detector **12** may further comprise the step of activating a wheel sensor **38.** The step of activating the wheel sensor **38** may precede the steps of detecting the temperature of the IR emission **17,** activating the IR emitter **26** to emit an IR signal **32** and detecting the temperature of the IR signal **32.**

The controller **36** may monitor the wheel sensor **38.** Signals from the wheel sensor **38** may be sent to the controller **36.** The controller **36** may activate the IR detector **12** and the IR emitter **26.** The IR emitter **26** may be activated to emit the IR signal **32** between the passage of the target undercarriage component **16.**

In an embodiment, the controller **36** may record the signals and the information relating to the passage of a rail vehicle. After the rail vehicle has passed, the controller may activate the IR emitter **26** and the IR detector **12.** The controller **36** may replicate signals and information from the wheel sensor **38.** The replicated signals from the controller **36** may simulate the wheel signals of a passing rail vehicle travelling at a known speed. The replicated wheel signals simulating passage of a rail vehicle may be used to test IR detector **12.**

The skilled person would appreciate that foregoing embodiments may be modified or combined to obtain the apparatus **10** or the method of the present disclosure.

### Industrial Applicability

This disclosure describes an apparatus **10** for verifying the integrity of an IR detector **12.** The IR detector **12** may be used to obtain infrared IR emission data from rail vehicle undercarriage components **16.** The IR data may be obtained by sensing a wheel or a wheel bearing of a rail vehicle passing over the IR detector **12.** The IR detectors **12** may be located along a section of a rail track. Abnormal thermal readings may indicate the possibility of overheating undercarriage components **16**, such as bearings that are failing or malfunctioning brakes.

For safety reasons the proper operation of the IR detectors **12** is critical. There is a need to periodically check the IR detectors **12** for proper operation, preferably without the need for manual testing and inspection.

The apparatus **10** and method may include an IR emitter **26** which sends an IR signal to the IR detector **12.** The IR emitter **26** may be located in the detection path **14** of the IR detector **12.** The IR emitter **26** may be activated periodically so as to send an infrared signal to the IR detector **12.** The apparatus **10** and method may test the accuracy of the infrared IR emission data obtained by the IR detector **12.** A control system may monitor the response of the IR detector **12** to determine if the emitted signal from the IR emitter **26** was received properly. The IR emitter **26** may not interfere with normal operation of the IR detector **12.**

The apparatus **10** may perform an integrity test on the IR detector **12** during the passage of rail vehicle. The IR emitter **26** may send an IR signal **32** as the rail vehicle is passing over the IR detetors **12** so that the integrity test may be performed during actual operation of the IR detection system. The IR emitter **26** may send an IR signal **32** between passage of the each rail car over the IR detector **12.** The IR emitter **26** may send an IR signal **32** between passage of each undercarriage components **16** over the IR detector **12.**

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description.

## Claims

1. An apparatus (10) for integrity verification of an IR detector (12), the apparatus (10) comprising:
an undercarriage component (16);
an IR detector (12) configured to detect a temperature of an IR emission (17) from the undercarriage component (16) in a detection path (14), the detection path (14) being defined as the optical path from the undercarriage component (16) to the IR detector (12),
an IR emitter (26) configured to emit an IR signal (32) at a reference temperature wherein the IR emitter (26) is positioned such that the IR signal (32) is directed at the IR detector (12); and
a controller (36) connected to the IR detector (12) and the IR emitter (26) wherein the controller (36) is configured to compare the reference temperature of the IR signal (32) and the detected temperature of the IR signal (32) detected by the IR detector (12) to determine the integrity of the IR detector (12) **characterized in that** the IR emitter (26) is positioned in the detection path (14).

2. The apparatus (10) of claim 1 wherein the IR signal (32) is directed at the IR detector (12) by at least one reflector (28, 29).

3. The apparatus (10) of claim 2 wherein the IR reflector (28) is mounted to the IR emitter (26).

4. The apparatus (10) of claims 1, 2 or 3 wherein the an IR emitter (26) is mounted to a body (20) comprising the IR detector (12).

5. The apparatus (10) of claim 4 wherein the IR emitter (26) is externally mounted to the body (20).

6. The apparatus (10) of any one of preceding claims further comprising a lens (30) to focus the IR signal (32) on the IR detector (12) wherein the IR signal (32) is off the optical axis and passes through the lens (30) at an angle to the optical axis.

7. The apparatus (10) of any one of preceding claims wherein the IR emitter (26) is positioned between 300mm to 150mm from the IR detector (12).

8. The apparatus (10) of any one of preceding claims further comprising a wheel sensor (38) connected to the controller (36).

9. A method for integrity verification of an IR detector (12) configured to detect a temperature of an IR emission (17) from an undercarriage component (16) in a detection path (14), the detection path (14) being defined as the optical path from the undercarriage component (16) to the IP detector (12), the method (10) comprising the steps of:
detecting temperature of the IR emission (17) during passage of a rail vehicle;
activating an IR emitter (26) to emit an IR signal (32) at a reference temperature, the IR emitter (26) being positioned such that the IR signal (32) is directed at the IR detector (12);
detecting temperature of the IR signal (32); and
comparing the reference temperature of the IR signal (32) by the IR detector (12) and the detected temperature of the IR signal (32) to determine the integrity of the IR detector (12) **characterised in that**
the IR emitter (26) is positioned in the detection path (14), and
the step of detecting the temperature of the IR emission (17) precedes the step of activating the IR emitter (26) to emit an IR signal (32) and the step of detecting the temperature of the IR signal (32).

10. The method of claims 9 further comprising the step of determining the accuracy of the detected temperature of the IR emission (17).

11. The method of claim 10 wherein the detected temperature of the IR emission (17) is determined accurate when the reference temperature of the IR signal (32) is substantially equal to the detected temperature of the IR signal.

12. The method of claim 10 wherein the detected temperature of the IR emission is determined inaccurate when the reference temperature of the IR signal is not substantially equal to the detected temperature of the IR signal.

## Patentansprüche

1. Vorrichtung (10) zur Integritätsprüfung eines IR-Detektors (12), wobei die Vorrichtung (10) Folgendes umfasst:
eine Fahrwerkskomponente (16);
einen IR-Detektor (12), der konfiguriert ist, um eine Temperatur einer IR-Emission (17) von der Fahrwerkskomponente (16) in einem Detektionspfad (14) zu erfassen, wobei der Detektionspfad (14) als der optische Pfad von der Fahrwerkskomponente (16) zum IR-Detektor (12) definiert ist,
einen IR-Strahler (26), der konfiguriert ist, um ein IR-Signal (32) bei einer Referenztemperatur zu emittieren, wobei der IR-Strahler (26) so positioniert ist, dass das IR-Signal (32) auf den IR-Detektor (12) gerichtet ist; und
eine Steuerung (36), die mit dem IR-Detektor (12) und dem IR-Strahler (26) verbunden ist, wobei die Steuerung (36) so konfiguriert ist, dass sie die Referenztemperatur des IR-Signals (32) und die erfasste Temperatur des vom IR-Detektor (12) erfassten IR-Signals (32) vergleicht, um die Integrität des IR-Detektors (12) zu bestimmen, **dadurch gekennzeichnet, dass** der IR-Strahler (26) in dem Detektionspfad (14) positioniert ist.

2. Vorrichtung (10) nach Anspruch 1, wobei das IR-Signal (32) von mindestens einem Reflektor (28, 29) auf den IR-Detektor (12) gerichtet ist.

3. Vorrichtung (10) nach Anspruch 2, wobei der IR-Reflektor (28) an dem IR-Strahler (26) montiert ist.

4. Vorrichtung (10) nach Anspruch 1, 2 oder 3, wobei der IR-Strahler (26) an einem Körper (20) montiert ist, der den IR-Detektor (12) umfasst.

5. Vorrichtung (10) nach Anspruch 4, wobei der IR-Strahler (26) außen am Körper (20) montiert ist.

6. Vorrichtung (10) nach einem der vorhergehenden Ansprüche, ferner umfassend eine Linse (30) zum Fokussieren des IR-Signals (32) auf den IR-Detektor (12), wobei sich das IR-Signal (32) außerhalb der optischen Achse befindet und in einem Winkel zur optischen Achse durch die Linse (30) tritt.

7. Vorrichtung (10) nach einem der vorhergehenden Ansprüche, wobei der IR-Strahler (26) zwischen 300 mm und 150 mm vom IR-Detektor (12) positioniert ist.

8. Vorrichtung (10) nach einem der vorhergehenden Ansprüche, ferner umfassend einen Radsensor (38), der mit der Steuerung (36) verbunden ist.

9. Verfahren zur Integritätsprüfung eines IR-Detektors (12), der konfiguriert ist, um eine Temperatur einer IR-Emission (17) von einer Fahrwerkskomponente (16) in einem Detektionspfad (14) zu erfassen, wobei der Detektionspfad (14) als der optische Pfad von der Fahrwerkskomponente (16) zum IP-Detektor (12) definiert ist, wobei das Verfahren (10) die folgenden Schritte umfasst:
Erfassen der Temperatur der IR-Emission (17) während des Durchfahrens eines Schienenfahrzeugs;
Aktivieren eines IR-Strahlers (26) zum Aussenden eines IR-Signals (32) bei einer Referenztemperatur, wobei der IR-Strahler (26) so positioniert ist, dass das IR-Signal (32) auf den IR-Detektor (12) gerichtet ist;
Erfassen der Temperatur des IR-Signals (32); und
Vergleichen der Referenztemperatur des IR-Signals (32) durch den IR-Detektor (12) und der erfassten Temperatur des IR-Signals (32) zum Bestimmen der Integrität des IR-Detektors (12), **dadurch gekennzeichnet, dass**
der IR-Strahler (26) im Detektionspfad (14) positioniert ist und
der Schritt des Erfassens der Temperatur der IR-Emission (17) dem Schritt des Aktivierens des IR-Strahlers (26) zum Aussenden eines IR-Signals (32) und dem Schritt des Erfassens der Temperatur des IR-Signals (32) vorausgeht.

10. Verfahren nach Anspruch 9, ferner umfassend den Schritt des Bestimmens der Genauigkeit der erfassten Temperatur der IR-Emission (17).

11. Verfahren nach Anspruch 10, wobei die erfasste Temperatur der IR-Emission (17) als genau bestimmt wird, wenn die Referenztemperatur des IR-Signals (32) im Wesentlichen gleich der erfassten Temperatur des IR-Signals ist.

12. Verfahren nach Anspruch 10, wobei die erfasste Temperatur der IR-Emission als nicht genau bestimmt wird, wenn die Referenztemperatur des IR-Signals nicht im Wesentlichen gleich der erfassten Temperatur des IR-Signals ist.

## Revendications

1. Appareil (10) pour la vérification de l'intégrité d'un détecteur IR (12), l'appareil (10) comprenant :
un composant de châssis (16) ;
un détecteur IR (12) configuré pour détecter une température d'une émission IR (17) provenant du composant de châssis (16) dans un chemin de détection (14), le chemin de détection (14) étant défini comme le chemin optique du composant de châssis (16) vers le détecteur IR (12),
un émetteur IR (26) configuré pour émettre un signal IR (32) à une température de référence dans lequel l'émetteur IR (26) est positionné de telle sorte que le signal IR (32) soit dirigé vers le détecteur IR (12) ; et
un contrôleur (36) connecté au détecteur IR (12) et à l'émetteur IR (26) dans lequel le contrôleur (36) est configuré pour comparer la température de référence du signal IR (32) et la température détectée du signal IR (32) détecté par le détecteur IR (12) pour déterminer l'intégrité du détecteur IR (12) **caractérisé en ce que** l'émetteur IR (26) est positionné dans le chemin de détection (14).

2. Appareil (10) selon la revendication 1 dans lequel le signal IR (32) est dirigé vers le détecteur IR (12) par au moins un réflecteur (28, 29).

3. Appareil (10) selon la revendication 2 dans lequel le réflecteur IR (28) est monté sur l'émetteur IR (26).

4. Appareil (10) selon les revendications 1, 2 ou 3 dans lequel l'émetteur IR (26) est monté sur un corps (20) comprenant le détecteur IR (12).

5. Appareil (10) selon la revendication 4 dans lequel l'émetteur IR (26) est monté de manière externe sur le corps (20).

6. Appareil (10) selon l'une quelconque des revendications précédentes comprenant en outre une lentille (30) pour focaliser le signal IR (32) sur le détecteur IR (12) dans lequel le signal IR (32) est hors de l'axe optique et traverse la lentille (30) selon un angle par rapport à l'axe optique.

7. Appareil (10) selon l'une quelconque des revendications précédentes dans lequel l'émetteur IR (26) est positionné entre 300 mm et 150 mm du détecteur IR (12).

8. Appareil (10) selon l'une quelconque des revendications précédentes comprenant en outre un capteur de roue (38) connecté au contrôleur (36).

9. Procédé de vérification de l'intégrité d'un détecteur IR (12) configuré pour détecter une température d'une émission IR (17) provenant d'un composant de châssis (16) dans un chemin de détection (14), le chemin de détection (14) étant défini comme le chemin optique du composant de châssis (16) au détecteur IR (12), le procédé (10) comprenant les étapes consistant à :
détecter une température de l'émission IR (17) pendant le passage d'un véhicule ferroviaire ;
activer un émetteur IR (26) pour émettre un signal IR (32) à une température de référence, l'émetteur IR (26) étant positionné de telle sorte que le signal IR (32) soit dirigé vers le détecteur IR (12) ;
détecter une température du signal IR (32) ; et
comparer la température de référence du signal IR (32) par le détecteur IR (12) et la température détectée du signal IR (32) pour déterminer l'intégrité du détecteur IR (12) **caractérisé en ce que**
l'émetteur IR (26) est positionné dans le chemin de détection (14), et
l'étape de détection de la température de l'émission IR (17) précède l'étape d'activation de l'émetteur IR (26) pour émettre un signal IR (32) et l'étape de détection de la température du signal IR (32).

10. Procédé selon la revendication 9 comprenant en outre l'étape de détermination de la précision de la température détectée de l'émission IR (17).

11. Procédé selon la revendication 10 dans lequel la température détectée de l'émission IR (17) est déterminée précise lorsque la température de référence du signal IR (32) est sensiblement égale à la température détectée du signal IR.

12. Procédé selon la revendication 10 dans lequel la température détectée de l'émission IR est déterminée imprécise lorsque la température de référence du signal IR n'est pas sensiblement égale à la température détectée du signal IR.
